# EUROPEAN PATENT APPLICATION

(11) **EP 2 339 678 A1**
(43) Date of publication of application: **29.06.2011**
(21) Application number: 11160143.1
(22) Date of filing: 23.08.2007
(51) Int. Cl.: H01M 8/02, B29C 41/24, H01B 1/06, H01B 13/00

(54) **Polymer electrolyte membrane and laminate thereof**

(30) Priority: 25.08.2006 JP 2006228921
(62) Divisional of application: 07806298.1
(71) Applicant: SUMITOMO CHEMICAL CO., LTD., Tokyo 104-8260 (JP)
(72) Inventor: Yamashita, Yasuhiro, Tsukuba-shi Ibaraki 305-0821 (JP); Nodono, Mitsunori, Tsukuba-shi Ibaraki 305-0045 (JP)
(74) Representative: Henkel, Feiler & Hänzel

(57) **Abstract**

Provided is a method for producing a laminate in which an ion conductive polymer electrolyte membrane is laminated on a supporting substrate in a state where any one surface of the polymer electrolyte membrane is bonded to the supporting substrate, a difference in a contact angle against water between a first surface and a second surface of the surface of the ion conductive polymer electrolyte membrane being more than 30° in a case where the first surface is the side having a small contact angle against water of a membrane surface and the second surface is the side having a large contact angle against water of the membrane surface, the method includes the steps of:
preparing a polymer electrolyte solution in which a polymer electrolyte containing an ion conductive polymer having an aromatic group in the main chain and/or the side chain, and also having an ion exchange group bonded directly to the aromatic group or bonded indirectly to the aromatic group with another atom or atomic group interposed therebetween is dissolved in a solvent; and
applying the polymer electrolyte solution on the supporting substrate by flow casting thereby laminating the polymer electrolyte membrane on the supporting substrate.

## Description

### TECHNICAL FIELD

The present invention relates to a polymer electrolyte membrane. More particularly, the present invention relates to a polymer electrolyte membrane which is used as an electrolyte membrane of a solid polymer type fuel cell.

### BACKGROUND ART

A solid polymer type fuel cell is a power generator for generating electricity by a chemical reaction between hydrogen and oxygen, and is very expected as one of next-generation energies in the fields of electrical machinery industry or automobile industry. In place of a fluorine-based polymer electrolyte typified by Nafion (registered trademark of E. I. du Pont de Nemours and Company) which has conventionally been used as a diaphragm in the solid polymer type fuel cell, a hydrocarbon-based polymer electrolyte having excellent in heat resistance and gas barrier properties has been attracted recently (JP-A-6-93114).

To industrially produce a hydrocarbon-based polymer electrolyte membrane, it is important to continuously forming a membrane while maintaining high characteristics and high quality. For example, a membrane is usually formed by a so-called solution casting method in which an aromatic polymer electrolyte is dissolved in a solvent and the resulting solution is applied by flow casting and then dried (JP-A-2003-031232, JP-A-2004-134225, JP-A-2005-154710, JP-A-2005-216525).

### DISCLOSURE OF THE INVENTION

In the solution casting method associated with the process for production of a polymer electrolyte membrane for a solid polymer type fuel cell (membrane formation), a membrane is produced through the steps of applying a solution on a supporting substrate, drying a solvent and removing the solvent by immersion in water, followed by dehydration. Since the polymer electrolyte membrane repeatedly causes swelling and shrinkage by exposing to various environments, it is important to produce the polymer electrolyte membrane by the step of continuously treating without causing wrinkles and scratches. In particular, if tight adhesion between the supporting substrate and the polymer electrolyte membrane formed on the supporting substrate is poor in a washing step, when the time of immersion in water is comparatively increased so as to improve removal efficiency of the remaining solvent, there is a fear that partial peeling occurs between the supporting substrate and the polymer electrolyte membrane and thus the peeled portion may cause wrinkles. Further, when severe peeling occurs between the supporting substrate and the polymer electrolyte membrane, it sometime becomes difficult to perform washing.

In light of industrial production of a polymer electrolyte membrane, an object of the present invention is to provide a polymer electrolyte membrane in which the substrate side of the surface of the electrolyte membrane has tight adhesion enough to prevent the occurrence of peeling from the substrate even when immersed in water in the washing step and the other side easily causes an interaction with an electrode. Namely, the present invention provides an electrolyte membrane in which a difference in wettability against water between a first surface and a second surface of the surface of the electrolyte membrane (difference in a contact angle against water) is large, and a method for producing the electrolyte membrane.

The present inventors have intensively studied so as to achieve the above-described object, and thus the present invention has been completed. The present invention provides an ion conductive polymer electrolyte membrane, a laminate containing the polymer electrolyte membrane, and a method for producing the same.

First, the present invention provides a method for producing a laminate according to the below-described [1].
[1] A method for producing a laminate in which an ion conductive polymer electrolyte membrane is laminated on a supporting substrate in a state where any one surface of the polymer electrolyte membrane is bonded to the supporting substrate, a difference in a contact angle against water between a first surface and a second surface of the surface of the ion conductive polymer electrolyte membrane being more than 30° in a case where the first surface is the side having a small contact angle against water of a membrane surface and the second surface is the side having a large contact angle against water of the membrane surface, the method including the steps of:
   preparing a polymer electrolyte solution in which a polymer electrolyte containing an ion conductive polymer having an aromatic group in the main chain and/or the side chain, and also having an ion exchange group bonded directly to the aromatic group or bonded indirectly to the aromatic group with another atom or atomic group interposed therebetween is dissolved in a solvent; and
   applying the polymer electrolyte solution onto the supporting substrate by flow casting thereby laminating the polymer electrolyte membrane on the supporting substrate.
   According to the above description, it is possible to obtain a polymer electrolyte membrane in which peeling during the washing step can be sufficiently prevented by imparting a large difference in a contact angle of more than 30° between both surfaces of the polymer electrolyte membrane by applying a polymer electrolyte solution onto the surface of a proper supporting substrate through flow casting without performing post-processing such as a surface treatment after membrane formation when the polymer electrolyte membrane is formed by a solution casting method, and the side of one surface has high tight adhesion with an electrode.
   Furthermore, the present invention provides the below-described [2] and [3] as preferred embodiments according to the above-described [1].
[2] The method for producing a laminate according to [1], wherein the surface to be applied by flow casting of the supporting substrate is formed of a resin.
[3] The method for producing a laminate according to [1] or [2], wherein the supporting substrate is a resin film.
   As the supporting substrate which can easily increase a contact angle of the supporting substrate side of the polymer electrolyte membrane by applying through flow casting, a supporting substrate whose surface to be applied by flow casting is formed of a resin is suitable, and a resin film is usually used.
   Further, the present invention provides the below-described [4] to [15] in any one of the above-described methods.
[4] The method for producing a laminate according to any one of [1] to [3], wherein the ion conductive polymer has an aromatic ring in the main chain, and also has an ion exchange group bonded directly to the aromatic group or bonded indirectly to the aromatic group with another atom or atomic group interposed therebetween.
[5] The method for producing a laminate according to [4], wherein the ion conductive polymer has a side chain.
[6] The method for producing a laminate according to any one of [1] to [3], wherein the ion conductive polymer has an aromatic ring in the main chain, and also may have a side chain having an aromatic ring and has an ion exchange group in which at least one of the aromatic ring of the main chain and the aromatic ring of the side chain is bonded directly to the aromatic ring.
[7] The method for producing a laminate according to any one of [4] to [6], wherein the ion exchange group is a sulfonic acid group.
[8] The method for producing a laminate according to any one of [1] to [7], wherein the ion conductive polymer has one or more repeating units having an ion exchange group selected from the following general formulas (1a) to (4a) : 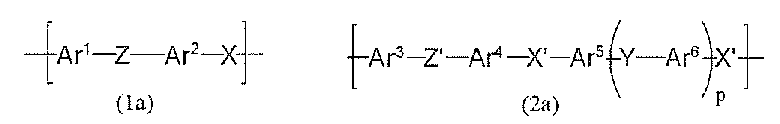 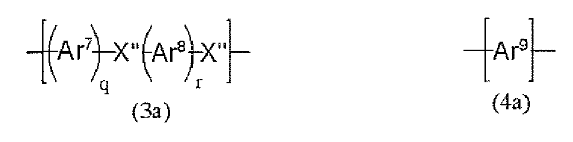 wherein Ar¹ to Ar⁹ each independently represents a divalent aromatic group which has an aromatic ring in the main chain and may also have a side chain having an aromatic ring, having an ion exchange group in which at least one of the aromatic ring of the main chain and the aromatic ring of the side chain is bonded directly to the aromatic ring, Z and Z' each independently represents either CO or SO₂, X, X' and X" each independently represents either O or S, Y represents a direct bond or a group represented by the following general formula (10), p represents 0, 1 or 2, and q and r each independently represents 1, 2 or 3; and one or more repeating units having substantially no ion exchange group selected from the following general formulas (1b) to (4b): 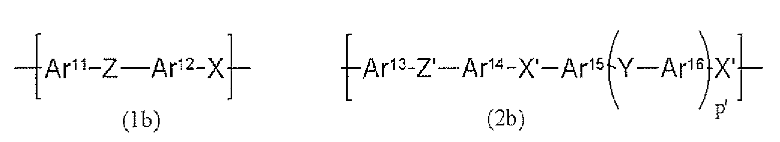 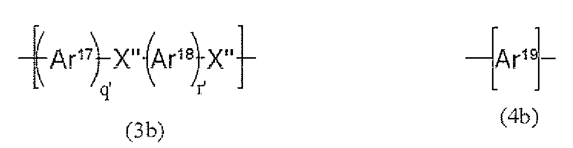 wherein Ar¹¹ to Ar¹⁹ each independently represents a divalent aromatic group which may have a substituent as the side chain, Z and Z' each independently represents either CO or SO₂, X, X' and X" each independently represents either O or S, Y represents a direct bond or a group represented by the following general formula (10), p' represents 0, 1 or 2, and q' and r' each independently represents 1, 2 or 3, and 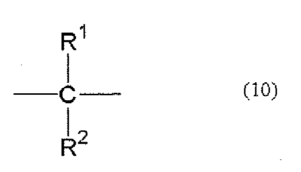 wherein R¹ and R² each independently represents a hydrogen atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acyl group having 2 to 20 carbon atoms which may have a substituent, and R¹ and R² may be combined to form a ring.
[9] The method for producing a laminate according to any one of [1] to [8], wherein the ion conductive polymer is a copolymer having one or more polymer segments (A) having an ion exchange group, and one or more polymer segments (B) having substantially no ion exchange group.
[10] The method for producing a laminate according to any one of [1] to [9], wherein the ion conductive polymer is a block copolymer including a block (A) having an ion exchange group and a block (B) having substantially no ion exchange group.
[11] The method for producing a laminate according to any one of [1] to [10], capable of forming a polymer electrolyte membrane having a structure microphase-separated into at least two or more phases.
[12] The method for producing a laminate according to any one of [1] to [11], capable of forming a polymer electrolyte membrane which contains, as the ion conductive polymer, a block copolymer including a block (A) having an ion exchange group and a block (B) having substantially no ion exchange group, and also has a microphase-separated structure containing a phase having a high density of a block (A) having an ion exchange group and a phase having a high density of a block (B) having substantially no ion exchange group.
[13] The method for producing a laminate according to any one of [1] to [12], wherein the ion conductive polymer has at least one block (A) having an ion exchange group and at least one block (B) having substantially no ion exchange group, the block (A) having an ion exchange group has a repeating structure represented by the following general formula (4a'): 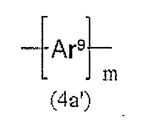 wherein m represents an integer of 5 or more, Ar⁹ represents a divalent aromatic group, in which the divalent aromatic group may be substituted with a fluorine atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent or an acyl group having 2 to 20 carbon atoms which may have a substituent, and Ar⁹ has an ion exchange group bonded directly to an aromatic ring constituting the main chain or bonded indirectly to an aromatic ring with the side chain interposed therebetween, and also
   the block (B) having substantially no ion exchange group has one or more repeating structures selected from the following general formulas (1b'), (2b') and (3b'): 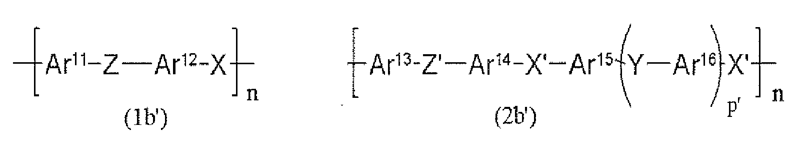 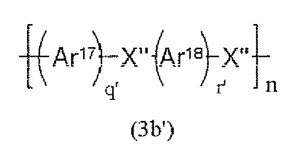 wherein n represents an integer of 5 or more, Ar¹¹ to Ar¹⁸ each independently represents a divalent aromatic group, in which the divalent aromatic group may be substituted with an alkyl group having 1 to 18 carbon atoms, an alkoxy group having 1 to 10 carbon atoms, an aryl group having 6 to 10 carbon atoms, an aryloxy group having 6 to 18 carbon atoms or an acyl group having 2 to 20 carbon atoms, and other symbols are the same as those in the general formulas (1b) to (3b).
[14] The method for producing a laminate according to any one of [1] to [13], wherein the ion conductive polymer has at least one block (A) having an ion exchange group and at least one block (B) having substantially no ion exchange group, and in the block (A) having an ion exchange group, an ion exchange group is directly bonded to an aromatic ring of the main chain.
[15] The method for producing a laminate according to any one of [1] to [14], wherein the ion conductive polymer has at least one block (A) having an ion exchange group and at least one block (B) having substantially no ion exchange group, and both the block (A) having an ion exchange group and the block (B) having substantially no ion exchange group substantially have no substituent containing a halogen atom.
   The present invention also provides the below-described [16] to [37] in any one of the above-described methods.
[16] A method for producing a polymer electrolyte membrane, containing the step of removing the supporting substrate from the laminate obtained by the method according to any one of [1] to [15].
[17] The method for producing a polymer electrolyte membrane according to [16], which does not include the step of surface-treating the surface of the side bonded to the supporting substrate of the polymer electrolyte membrane after removing the supporting substrate.
[18] A laminate obtained by the method according to any one of [1] to [15].
[19] A polymer electrolyte membrane obtained by the method according to [16] or [17].
[20] A polymer electrolyte membrane containing at least one ion conductive polymer, wherein a second surface is not subjected to the surface treatment, and a difference in a contact angle against water between a first surface and a second surface of the surface is more than 30° in a case where the first surface is the side having a small contact angle against water of a membrane surface and the second surface is the side having a large contact angle against water of the membrane surface.
[21] The polymer electrolyte membrane according to [20], wherein both the first surface and the second surface are not subjected to a surface treatment.
[22] The polymer electrolyte membrane according to [20] or [21], wherein the contact angle against water of the surface of the first surface of the membrane is 10° or more and 60° or less, and the contact angle against water of the surface of the second surface is 60° or more.
[23] The polymer electrolyte membrane according to any one of [20] to [22], wherein the contact angle against water of the surface of the second surface of the membrane is 110° or less.
[24] The polymer electrolyte membrane according to any one of [20] to [23], wherein the ion conductive polymer has an aromatic ring in the main chain, and also has an ion exchange group bonded directly to the aromatic ring or bonded indirectly to the aromatic ring with another atom or atomic group interposed therebetween.
[25] The polymer electrolyte membrane according to [24], wherein the ion conductive polymer has a side chain.
[26] The polymer electrolyte membrane according to any one of [20] to [23], wherein the ion conductive polymer has an aromatic ring in the main chain, and also may have a side chain having an aromatic ring and has an ion exchange group in which at least one of the aromatic ring of the main chain and the aromatic ring of the side chain is bonded directly to the aromatic ring or bonded indirectly to the aromatic ring with another atom interposed therebetween.
[27] The polymer electrolyte membrane according to any one of [24] to [26], wherein the ion exchange group is a sulfonic acid group.
[28] The polymer electrolyte membrane according to any one of [20] to [27], wherein the ion conductive polymer has one of more repeating units having an ion exchange group selected from the following general formulas (1a) to (4a): 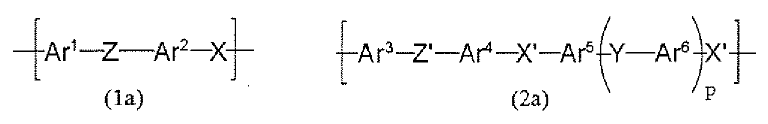 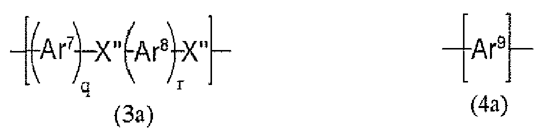 wherein Ar¹ to Ar⁹ each independently represents a divalent aromatic group which has an aromatic ring in the main chain, and also may have a side chain having an aromatic ring, and having a proton exchange group in which at least one of the aromatic ring of the main chain and the aromatic ring of the side chain is bonded directly to the aromatic ring, Z and Z' each independently represents either CO or SO₂, X, X' and X" each independently represents either O or S, Y represents a direct bond or a group represented by the following general formula (10), p represents 0, 1 or 2, and q and r each independently represents 1, 2 or 3, and one of more repeating units having substantially no ion exchange group selected from the following general formulas (1b) to (4b): 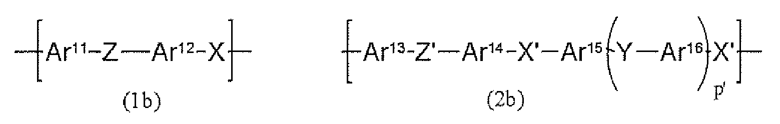 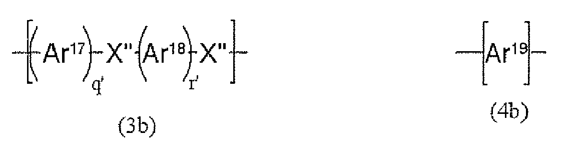 wherein Ar¹¹ to Ar¹⁹ each independently represents a divalent aromatic carbon group which may have a substituent as the side chain, Z and Z' each independently represents either CO or SO₂, X, X' and X" each independently represents either O or S, Y represents a direct bond or a group represented by the following general formula (10), p' represents 0, 1 or 2, and q' and r' each independently represents 1, 2 or 3, and 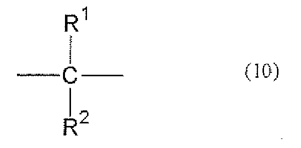 wherein R¹ and R² each independently represents a hydrogen atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent or an acyl group having 2 to 20 carbon atoms which may have a substituent, and R¹ and R² may be combined to form a ring.
[29] The polymer electrolyte membrane according to any one of [20] to [28], wherein the ion conductive polymer is a copolymer including a polymer segment (A) having an ion exchange group and a polymer segment (B) having substantially no ion exchange group.
[30] The polymer electrolyte membrane according to any one of [20] to [29], wherein the ion conductive polymer is a block copolymer including a block (A) having an ion exchange group and a block (B) having substantially no ion exchange group.
[31] The polymer electrolyte membrane according to any one of [20] to [30], which has a structure microphase-separated into at least two or more phases.
[32] The polymer electrolyte membrane according to any one of [20] to [31], which contains, as the ion conductive polymer, a block copolymer including a block (A) having an ion exchange group and a block (B) having substantially no ion exchange group, and also has a microphase-separated structure containing a phase having a high density of a block (A) having an ion exchange group and a phase having a high density of a block (B) having substantially no ion exchange group.
[33] The polymer electrolyte membrane according to any one of [20] to [32], wherein the ion conductive polymer has at least one block (A) having an ion exchange group and at least one block (B) having substantially no ion exchange group, the block (A) having an ion exchange group has a repeating structure represented by the following general formula (4a') : 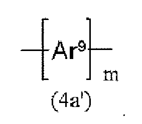 wherein m represents an integer of 5 or more, Ar⁹ represents a divalent aromatic group, in which the divalent aromatic group may be substituted with a fluorine atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acyl group having 2 to 20 carbon atoms which may have a substituent, and Ar⁹ has an ion exchange group bonded directly to an aromatic ring constituting the main chain or bonded indirectly to an aromatic ring with the side chain interposed therebetween, and
   the block (B) having substantially no ion exchange group has one or more repeating structures selected from the following general formulas (1b'), (2b') and (3b'): 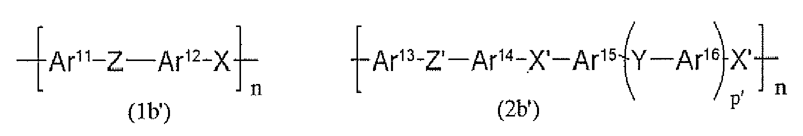 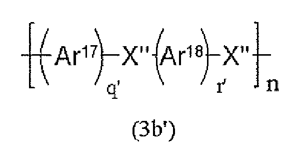 wherein n represents an integer of 5 or more, Ar¹¹ to Ar¹⁸ each independently represents a divalent aromatic group, in which the divalent aromatic group may be substituted with an alkyl group having 1 to 18 carbon atoms, an alkoxy group having 1 to 10 carbon atoms, an aryl group having 6 to 10 carbon atoms, an aryloxy group having 6 to 18 carbon atoms or an acyl group having 2 to 20 carbon atoms, and other symbols are the same as those in the general formulas (1b) to (3b).
[34] The polymer electrolyte membrane according to any one of [20] 0 to [33], wherein the ion conductive polymer has at least one block (A) having an ion exchange group and at least one block (B) having substantially no ion exchange group, and in the block (A) having an ion exchange group, an ion exchange group is bonded directly to an aromatic ring of the main chain.
[35] The polymer electrolyte membrane according to any one of [20] to [34], wherein the ion conductive polymer has at least one block (A) having an ion exchange group and at least one block (B) having substantially no ion exchange group, and both the block (A) having an ion exchange group and the block (B) having substantially no ion exchange group have substantially no substituent containing a halogen atom.
[36] A laminate in which the ion conductive polymer electrolyte membrane according to any one of [20] to [35] is laminated on a supporting substrate in a state where the second surface of the polymer electrolyte membrane is bonded to the supporting substrate.
[37] The laminate according to [36], wherein the surface bonded to the polymer electrolyte membrane of the supporting substrate is formed of a resin.
[38] The laminate according to [36] or [37], wherein the supporting substrate is a resin film.

The present invention can provide a method for producing an excellent laminate, which is excellent in handling properties during a continuous membrane forming step and can sufficiently prevent peeling with a supporting substrate in a washing step since one surface of the polymer electrolyte membrane exhibits highly tight adhesion between the polymer electrolyte membrane and the supporting substrate when the polymer electrolyte membrane is formed by a solution casting method.

Furthermore, since the other surface of the polymer electrolyte membrane obtained by the present invention, namely, the surface opposite the supporting substrate side has good affinity with an electrode for a fuel cell, and thus excellent characteristics required as the electrolyte membrane for a fuel cell and high utility value are attained.

When the polymer electrolyte membrane obtained by the present invention is used as an electrolyte membrane for a fuel cell, it becomes possible to move moisture from the air electrode side to the fuel electrode side by using a second surface having low wettability against water contacted with the supporting substrate upon membrane formation to the air electrode side and using an opposite first surface having high wettability against water to the fuel electrode side. Thus, the effects of optimizing moisture distribution of the air electrode, the electrolyte membrane and the fuel electrode can be expected.

Therefore, the polymer electrolyte membrane produced by the method of the present invention is an industrially useful as a high-functional type polymer electrolyte membrane for a solid polymer type fuel cell.

Further, according to the present invention, the membrane peeled from the supporting substrate after washing and drying in the continuous step can be directly taken up and laminated alone without using an inserting paper and generating blocking, and thus the present invention is industrially useful.

### BEST MODE FOR CARRYING OUT THE INVENTION

The polymer electrolyte membrane of the present invention will now be described in detail. The polymer electrolyte is an electrolyte resin containing at least one ion conductive polymer and a membrane made of the polymer electrolyte is referred to as a polymer electrolyte membrane. The polymer electrolyte membrane preferably contains the ion conductive polymer in an amount of 50% by weight or more, preferably 70% by weight or more, and particularly preferably 90% by weight or more.

The ion conductive polymer means a polymer which substantially has an ion exchange group, and has a group associated with ionic conduction, especially proton conduction, when used as an electrolyte membrane of a solid polymer type fuel cell.

In the polymer electrolyte membrane of the present invention, an amount of the ion exchange group which is responsible for ion conductivity to be introduced is preferably from 0.5 meq/g to 4.0 meq/g, and more preferably from 1.0 meq/g to 2.8 meq/g, in terms of ion exchange capacity. The ion exchange capacity, which indicates the amount of an ion exchange group to be introduced, is preferably 0.5 meq/g or more, since proton conductivity further increases and thus more excellent function required as a polymer electrolyte for a fuel cell is attained. In contrast, the ion exchange capacity, which indicates the amount of an ion exchange group to be introduced, is preferably 4.0 meq/g or less, since water resistance is more improved.

In the polymer electrolyte membrane of the present invention, a difference in a contact angle against water between a first surface and a second surface is more than 30°, in a case where the side having a small contact angle against water of the membrane surface (namely, the side having high hydrophilicity) is the first surface and the side having a large contact angle against water (namely, the side having low hydrophilicity) is the second surface.

Furthermore, the contact angle against water of the surface of the first surface is preferably 10° or more and 60° or less, and more preferably 20° or more and 50° or less.

The contact angle against water of the surface of the first surface is preferably 10° or more since the surface of the polymer electrolyte membrane is more excellent in dimensional stability upon water absorption.

The contact angle against water of the surface of the first surface is preferably 60° or less since tight adhesion between the produced polymer electrolyte membrane and the electrode for a fuel cell more increases.

Further, the contact angle against water of the surface of the second surface is preferably 60° or more, and more preferably 70° or more. The contact angle against water of the surface of the second surface is preferably 60° or more since tight adhesion with the supporting substrate is more excellent during and after production and a fear of causing blocking between membranes during taking-up of the membrane in a scroll-like manner decreases.

Further, the contact angle against water of the surface of the second surface is preferably 110° or less, and more preferably 100° or less. When the contact angle against water of the surface of the second surface is 110° or less, wettability with the surface further increases and practical tight adhesion between the produced polymer electrolyte membrane and the electrode for a fuel cell is maintained. Further, in the washing step, rinse water can sufficiently penetrate into the surface contacted with the supporting substrate from the surface opposite the supporting substrate. Therefore, removal of the solvent remaining in the polymer electrolyte membrane can be attained within a practical washing time.

The contact anglse against water of the surfaces of the first surface and the second surface of the polymer electrolyte membrane are values of the polymer electrolyte membrane which is not subjected to post-processing such as a surface treatment to the polymer electrolyte membrane.

The membrane, which is not subjected to a post-processing treatment such as a surface treatment, is industrially very useful since the number of the step in the membrane formation step can be decreased. Further, since the membrane surface may cause chemical or physical degradation when subjected to a surface treatment or the like in some cases, it is preferred that the membrane is not subjected to a surface treatment.

According to the present invention, it is possible to impart a large difference in a contact angle of more than 30° between surfaces of the polymer electrolyte membrane by applying a polymer electrolyte solution onto the surface of a proper supporting substrate through flow casting without performing post-processing such as a surface treatment after membrane formation when the polymer electrolyte membrane is formed by a solution casting method. Namely, it is possible to impart a sufficient difference in hydrophilicity between both surfaces of the membrane without subjecting a second surface serving as a bonded surface with a supporting substrate upon flow casting and a first surface serving as a contact surface with air upon flow casting to a special surface treatment after membrane formation using a solution casting method.

The fact that post-processing such as surface treatment is not performed means that the surface of the membrane obtained by the membrane formation step including flow casting does not undergo an additional change after the flow casting step.

Examples of the surface treatment include hydrophilicizing treatments such as corona treatment and plasma treatment, and water repelling treatments such as fluorination treatment. After subjecting to the hydrophilicizing treatment, a hydrophilic group is usually imparted on the surface, or the surface is a rough surface having fine unevenness. After subjecting to the water repelling treatment, a hydrophobic group is usually imparted to the surface.

Therefore, specific examples of a state of the polymer electrolyte membrane which is not subjected to a surface treatment include a state in which a functional group other than an original functional group peculiar to the polymer electrolyte membrane is not imparted to the surface, or the imparted functional group is an original functional group peculiar to the polymer electrolyte membrane but an existing amount thereof does not vary (the amount of the functional group does not increase or decrease), or the surface is not intentionally roughened after the membrane formation step. As described above, the surface treatment means a treatment which causes a reversible change to the polymer electrolyte membrane. Therefore, in the polymer electrolyte constituting the polymer electrolyte membrane, a treatment according to the ion exchange reaction is not included in a category of the surface treatment since the ion exchange reaction itself is a reversible reaction.

As the method for producing a polymer electrolyte membrane of the present invention, a method for forming a membrane from a solution state (so-called solution casting method) is used particularly preferably.

Specifically, the polymer electrolyte membrane is preferably formed by dissolving at least one kind of an ion conductive polymer and, if necessary, other components such as polymers other than the ion conductive polymer, and additives in a proper solvent, applying the polymer electrolyte solution onto a specific substrate through flow casting (cast membrane formation) and removing the solvent.

The polymer electrolyte solution may be prepared by separately adding and dissolving two or more kinds of components constituting a polymer electrolyte in a solvent, such as by adding two or more kinds of ion conductive polymers to a solvent or separately adding the ion conductive polymer and other components to a solvent.

The solvent to be used in membrane formation is not specifically limited as long as it can dissolve the ion conductive polymer and optionally added other components and thereafter can be removed. Examples of the solvent preferably used include aprotic polar solvents such as dimethylformamide (DMF), dimethylacetamide (DMAc), N-methyl-2-pyrrolidone (NMP) and dimethyl sulfoxide (DMSO); chlorine-based solvents such as dichloromethane, chloroform, 1,2-dichloroethane, chlorobenzene and dichlorobenzene; alcohols such as methanol, ethanol and propanol; and alkylene glycol monoalkyl ethers such as ethylene glycol monomethyl ether, ethylene glycol monoethyl ether, propylene glycol monomethyl ether and propylene glycol monoethyl ether. These solvents can be used alone, or two or more kinds of solvents can also be optionally used in combination. Among these solvents, DMSO, DMF, DMAc NMP and the like are preferable because of high solubility of the ion conductive polymer.

When the polymer electrolyte membrane to be produced in the present invention is applied to a fuel cell, chemical stabilizers are preferably added to the polymer electrolyte so as to enhance chemical stability such as oxidation resistance or radical resistance to an extent that the effects of the present invention are not adversely affected. Examples of the stabilizers to be added include antioxidants described in JP-A-2003-201403, JP-A-2003-238678 and JP-A-2003-282096. Alternatively, it is possible to contain, as the chemical stabilizer, phosphonic acid group-containing polymers represented by the following formulas: 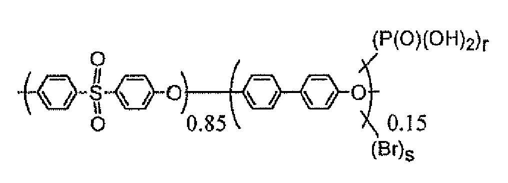 (r = 1 to 2.5, s = 0 to 0.5, the number attached to a repeating unit represents a molar fraction of the repeating unit) 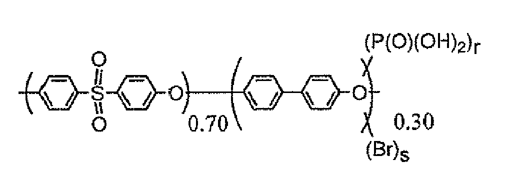 (r = 1 to 2.5, s = 0 to 0.5, the number attached to a repeating unit represents a molar fraction of the repeating unit) described in JP-A-2005-38834 and JP-A-2006-66391. Here, in the above formulas, "-(P(O) (OH)₂)ᵣ" and "-(Br)ₛ" represent that the number of phosphonic acid groups is r on average and the number of bromo groups is s on average per biphenylyleneoxy unit.

The content of the chemical stabilizer to be added is preferably within 20% by weight based on the entire polymer electrolyte. When the content is more than the above range, characteristics of the polymer electrolyte membrane may deteriorate.

In the present invention, the supporting substrate to be used in flow casting is preferably a substrate which enables continuous membrane formation. The substrate which enables continuous membrane formation means a substrate which can be retained in the form of a scroll and can endure even under an external force such as bending to some extent without causing breakage.

In the present invention, the substrate to be coated by flow casting is preferably a substrate having heat resistance and dimensional stability which endures drying conditions upon cast membrane formation, for example, a resin substrate having solvent resistance and water resistance to the above-described solvent, particularly preferably a resin film. Further, it is preferred that the polymer electrolyte membrane does not firmly adhere to the resin substrate and can be peeled after application and drying. Further, as used herein, "having heat resistance and dimensional stability" means that heat deformation does not occur when drying is conducted using a drying oven so as to remove the solvent after flow casting of the polymer electrolyte. Further, as used herein, "having solvent resistance" means that the substrate (film) itself is not substantially dissolved in the solvent in the polymer electrolyte solution. As used herein, "having water resistance" means that the substrate (film) itself is not substantially dissolve in an aqueous solution having pH of 4.0 to 7.0. Furthermore, "having solvent resistance" and "having water resistance" mean a concept in which chemical degradation is not caused by the solvent or water, and also the substrate occurs neither swelling nor shrinkage and has excellent dimensional stability.

Control of the contact angle against the film surface will be described. Wettability of the surface of the film depends on a combination of the polymer electrolyte and the substrate, and is represented by a difference in a contact angle. Here, the polymer electrolyte is preferably a copolymer when compared with a homopolymer, and a block copolymer is more preferably used among the copolymer. Among the block copolymer, a block copolymer having a microphase-separated structure is particularly preferable. As the preferred reason, it can be considered a hypothesis that since the microphase-separated structure has a microscopic aggregate, the contact angle is controlled by a strong interaction such as affinity or repulsive force between the polymer electrolyte and substrate.

When a polymer electrolyte solution is applied onto the surface of a proper supporting substrate by flow casting, it is easy to control a contact angle of the supporting substrate side of the resulting coat to a value which is larger than that of a contact angle of the other surface (air surface side) by an interaction between the polymer electrolyte and the substrate. In other words, the bonded surface with the supporting substrate of the polymer electrolyte membrane serves as a second surface having a large contact angle against water, whereas, the contact surface of the polymer electrolyte membrane with air serves as a first surface having a small contact angle against water.

A supporting substrate whose surface to be applied by flow casting is formed of a resin is suitable as a supporting substrate in which a contact angle of the supporting substrate side of the polymer electrolyte membrane can be easily increased by application through flow casting, and a resin film is usually used.

Examples of the supporting substrate composed of the resin film include an olefin-based film, a polyester-based film, a polyamide-based film, a polyimide-based film and a fluorine-based film. Among these films, a polyester-based film and a polyimide-based film are preferable since they are excellent in such as heat resistance, dimensional stability and solvent resistance. Examples of the material of the polyester-based film include such as polyethylene terephthalate, polyethylene naphthalate, polybutylene terephthalate and aromatic polyester. Among these materials, polyethylene terephthalate is industrially preferable in view of versatility and cost, including above various characteristics.

Further, the resin film can take the form of a continuous long flexible substrate and can be retained and used as a scroll, and is preferably used when a polymer electrolyte membrane is continuously formed.

According to the purposes, the substrate may be subjected to a surface treatment which can change wettability of the surface of the supporting substrate. Examples of the treatment capable of changing wettability of the surface of the supporting substrate include commonly used methods, for example, hydrophilicizing treatments such as corona treatment and plasma treatment, and water repelling treatments such as fluorination treatment.

A laminate including a supporting substrate and a polymer electrolyte membrane laminated thereon is obtained through the above membrane formation step. This laminate is sufficient in tight adhesion between the polymer electrolyte membrane and the supporting substrate and is therefore excellent in handling properties in the membrane formation step. For example, when the laminate is immersed in water for a long time so as to completely remove the solvent in the membrane after the flow casting and solvent drying steps, the polymer electrolyte membrane is easily peeled from the supporting substrate. However, since the laminate obtained by the present invention has highly tight adhesion between the polymer electrolyte membrane and the supporting substrate, there is an advantage that peeling of the membrane scarcely occurs during immersion in water even in such a case. Further, since the surface opposite the side contacted with the supporting substrate surface of the polymer electrolyte membrane serves as the surface to be contacted with rinse water in the washing step, it can also be expected that a water absorption rate of the rinse water in the membrane increases and thus removal efficiency of the solvent remaining in the polymer electrolyte membrane is improved.

The laminate may be stored and circulated as it is. When the substrate is a flexible substrate, the laminate can also be treated in a scroll-like form.

A polymer electrolyte membrane is obtained by removing a supporting substrate from the laminate. The supporting substrate may be usually removed by peeling from the laminate.

The thickness of the polymer electrolyte membrane in the present invention is not specifically limited, and is preferably from 10 to 300 µm. A membrane having a thickness of 10 µm or more is preferable since it is excellent in practical strength, while a membrane having a thickness of 300 µm or less is preferable since membrane resistance decreases and thus characteristics of an electrochemical device tend to be more improved. The thickness of the membrane can be controlled by a concentration of a solution and an applying thickness onto a base material.

The polymer electrolyte membrane obtained by the present invention has a feature that a difference in a contact angle against water between a first surface and a second surface is more than 30° even when post-processing such as a surface treatment is not conducted after the membrane formation.

Since the polymer electrolyte membrane has a feature that blocking scarcely occurs even when retained in the form of a scroll or laminated one upon another while facing the first surface and the second surface, the membrane can be taken up or laminated alone without using an inserting paper, and thus the present invention is industrially useful.

It is preferred that the ion conductive polymer in the present invention has an aromatic ring in the main chain, and has an ion exchange group bonded directly to the aromatic ring or bonded indirectly to the aromatic ring with another atom or atomic group interposed therebetween.

The ion conductive polymer in the present invention may have a side chain.

The ion conductive polymer in the present invention has an aromatic ring in the main chain, and further may have a side chain having an aromatic ring, and preferably has an ion exchange in which at least one of the aromatic ring of the main chain and the aromatic ring of the side chain is bonded directly to the aromatic ring.

The ion exchange group is preferably a cation exchange group.

The polymer electrolyte membrane of the present invention is preferably a hydrocarbon-based polymer electrolyte membrane, namely a membrane formed of a polymer electrolyte containing a hydrocarbon-based ion conductive polymer.

The hydrocarbon-based polymer electrolyte preferably contains the hydrocarbon-based ion conductive polymer in the amount of 50% by weight or more, and more preferably 80% by weight or more. However, as long as the effects of the present invention are not adversely affected, other polymers, non-hydrocarbon-based ion conductive polymers and additives may be contained.

The hydrocarbon-based ion conductive polymer typically does not contain any fluorine, or may be partially substituted with fluorine. Examples of the hydrocarbon-based ion conductive polymer include engineering resins having an aromatic main chain, such as polyether ether ketone, polyether ketone, polyethersulfone, polyphenylene sulfide, polyphenylene ether, polyether ethersulfone, polyparaphenylene and polyimide; general-purpose resins such as polyethylene and polystyrene; and polymers obtained by introducing an ion exchange group in a copolymer having a combination of a plurality kinds of repeating units constituting resins. In particular, since the main chain preferably has an aromatic ring, polymers obtained by introducing an ion exchange group in a copolymer having a combination of a plurality kinds of repeating units constituting the engineering resin such as described above or the engineering resin are preferable since a polymer electrolyte membrane having more excellent heat resistance is obtained.

The ion exchange group is preferably a cation exchange group such as a sulfonic acid group (-SO₃H), a carboxylic acid group (-COOH), a phosphoric acid group (-OP(O) (OH)₂), a phosphonic acid group (-P(O)(OH)₂) or a sulfonylimide group (-SO₂-NH-SO₂-) Among these groups, a sulfonic acid group is preferable.

Further, the hydrocarbon-based polymer electrolyte has an advantage that it is cheap when compared with the fluorine-based polymer electrolyte.

The polymer electrolyte used in the present invention is preferably a copolymer composed of a repeating unit having an ion exchange group and a repeating unit having no ion exchange group since it is easy to control a contact angle against water as described above. The manner of copolymerization of the copolymer may be any of random copolymerization, block copolymerization, graft copolymerization and alternating copolymerization, or a combination of these manners of copolymerization. In view of ease of controlling a contact angle, such as a block copolymer and a graft copolymer each having at least one polymer segment (A) having an ion exchange group and at least one polymer segment (B) having substantially no ion exchange group are more preferable. A block copolymer is more preferable.

Here, in the present invention, the segment or block has an "ion exchange group" means a segment or block having 0.5 or more ion exchange group on average per one repeating unit, and more preferably 1.0 or more ion exchange groups on average per one repeating unit.

On the other hand, the segment or block "has substantially no ion exchange group" means a segment or block having less than 0.5 ion exchange group on average per one repeating unit, more preferably less than 0.1 ion exchange group on average per one repeating unit, and still more preferably less than 0.05 ion exchange group on average per one repeating unit.

When the polymer electrolyte used in the present invention contains a block copolymer, the block copolymer preferably has at least one block (A) having an ion exchange group and at least one block (B) having substantially no ion exchange group.

When the polymer electrolyte used in the present invention contains a block copolymer, the polymer electrolyte membrane preferably forms a microphase-separated structure. The microphase-separated structure as used herein means a structure obtained as a result of the occurrence of microscopic phase separation of an order of a molecular chain size by bonding different kinds of polymer segments through a chemical bond in a block copolymer or a graft copolymer. That is, it means a structure in which a microphase (microdomain) having a high density of a block (A) having an ion exchange group and a microphase (microdomain) having a high density of a block (B) having substantially no ion exchange group coexist and each microdomain structure has a domain width, namely an identity period of several nanometers to several hundreds of nanometers when observed using a transmission electron microscope (TEM). A polymer electrolyte membrane having a microdomain structure of 5 nm to 100 nm is preferable.

Examples of the ion conductive polymer to be used in the polymer electrolyte of the present invention include those having a structure in conformity with JP-A-2005-126684 and JP-A-2005-139432.

More specific examples of the ion conductive polymer of the present invention include ion conductive polymers containing, as repeating units, any one or more repeating units of the general formulas (1a), (2a), (3a), (4a) and any one or more repeating units of the general formulas (1b), (2b), (3b) and (4b). Examples of the type of polymerization include such as block copolymerization, alternating copolymerization and random copolymerization.

In the present invention, a block copolymer is preferably a copolymer including one or more blocks of repeating units having an ion exchange group selected from the general formulas (1a), (2a), (3a) and (4a) and one or more blocks of repeating units having substantially no ion exchange group selected from the general formulas (1b), (2b), (3b) and (4b), and more preferably a copolymer including the following blocks such as:
<i> block of a repeating unit (1a), and a block of a repeating unit (1b),
<ii> block of a repeating unit (1a), and a block of a repeating unit (2b),
<iii> block of a repeating unit (2a), and a block of a repeating unit (1b),
<iv> block of a repeating unit (2a), and a block of a repeating unit (2b),
<v> block of a repeating unit (3a), and a block of a repeating unit (1b),
<vi> block of a repeating unit (3a), and a block of a repeating unit (2b),
<vii> block of a repeating unit (4a), and a block of a repeating unit (1b), and
<viii> block of a repeating unit (4a), and a block of a repeating unit (2b).

The block copolymer is more preferably a copolymer including the above-described <ii>, <iii>, <iv>, <vii> and <viii>, and particularly preferably a copolymer including the above-described <vii> and <viii>.

In more preferable block copolymer of the present invention, the repeating number of (4a), namely m in the above general formula (4a') represents an integer of 5 or more, and is preferably within a range from 5 to 1,000, and more preferably from 10 to 500. Here, m is preferably 5 or more since a polymer electrolyte for a fuel cell has sufficient proton conductivity. Here, m is preferably 1,000 or less since it is easy to produce.

Ar⁹ in the formula (4a') represents a divalent aromatic group. Examples of the divalent aromatic group include divalent monocyclic aromatic groups such as 1,3-phenylene and 1,4-phenylene groups; divalent condensed-ring aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl and 2,7-naphthalenediyl groups; and heteroaromatic groups such as pyridinediyl, quinoxalinediyl and thiophenediyl groups. Among these groups, divalent monocyclic aromatic groups are preferable.

Further, Ar⁹ may be substituted with an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acyl group having 2 to 20 carbon atoms which may have a substituent.

Ar⁹ has at least one ion exchange group on an aromatic ring constituting the main chain. The ion exchange group is preferably an acidic group (a cation exchange group) and more preferably a sulfonic acid group, a phosphonic acid group and a carboxylic acid group. Among them, it is more preferably a sulfonic acid group.

These ion exchange groups may be partially or entirely replaced by a metal ion or the like to form a salt. When used as a polymer electrolyte membrane for a fuel cell, it is preferred that the entire ion exchange groups are substantially in a state of a free acid.

Preferred examples of the repeating structure represented by the formula (4a') include the following formula.

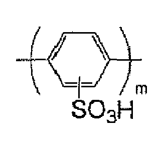

Further, in more preferred block copolymer of the present invention, the number of repeating units (1b) to (3b), namely n in the above general formulas (1b') to (3b') represents an integer of 5 or more, and is preferably within a range from 5 to 1,000, and more preferably from 10 to 500. Here, n is preferably 5 or more since the resulting polymer electrolyte for a fuel cell has sufficient proton conductivity. Here, n is preferably 1,000 or less since it is easy to produce.

Ar¹¹ to Ar¹⁸ in the formulas (1b') to (3b') each independently represents a divalent aromatic group. Examples of the divalent aromatic group include divalent monocyclic aromatic groups such as 1,3-phenylene and 1,4-phenylene groups; divalent condensed-ring aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl and 2,7-naphthalenediyl groups; and heteroaromatic groups such as pyridinediyl, quinoxalinediyl and thiophenediyl groups. Among these groups, divalent monocyclic aromatic groups are preferable.

Further, Ar¹¹ to Ar¹⁸ may be substituted with an alkyl group having 1 to 18 carbon atoms, an alkoxy group having 1 to 10 carbon atoms, an aryl group having 6 to 10 carbon atoms, an aryloxy group having 6 to 18 carbon atoms, or an acyl group having 2 to 20 carbon atoms.

Specific examples of the ion conductive polymer include the following structures.

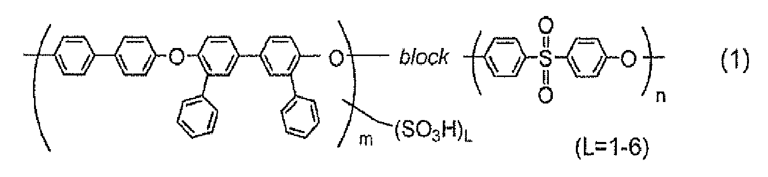

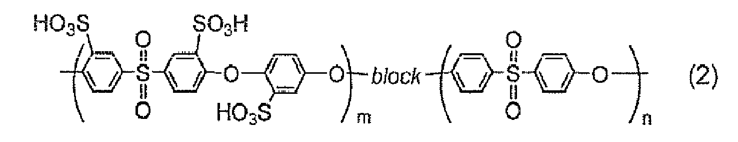

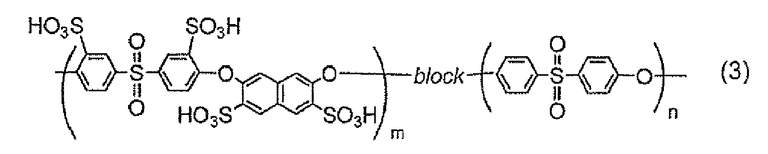

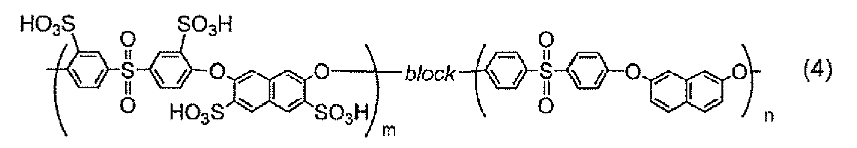

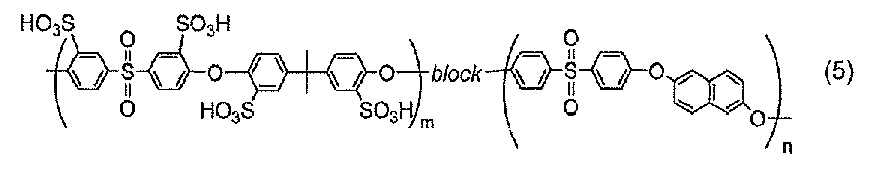

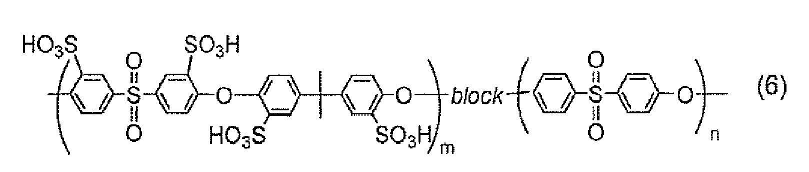

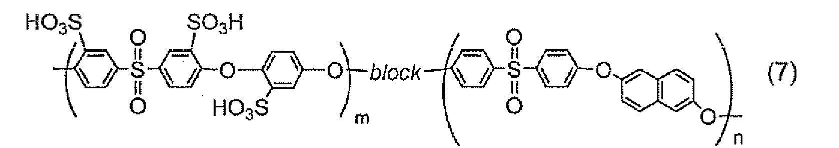

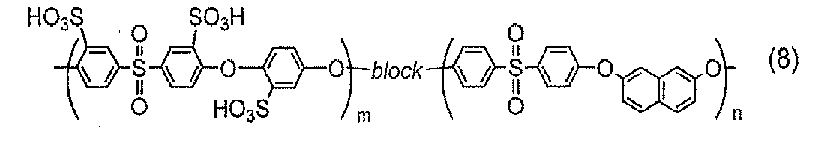

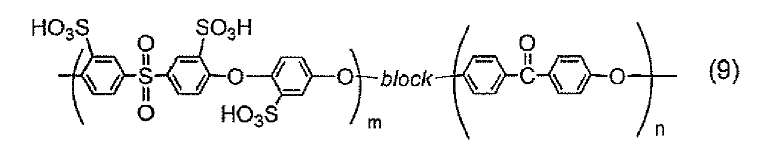

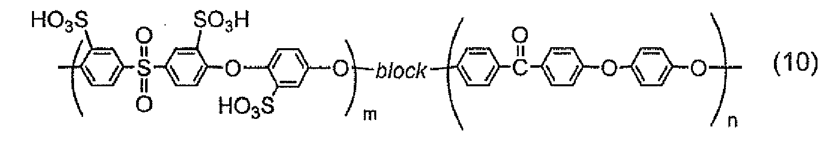

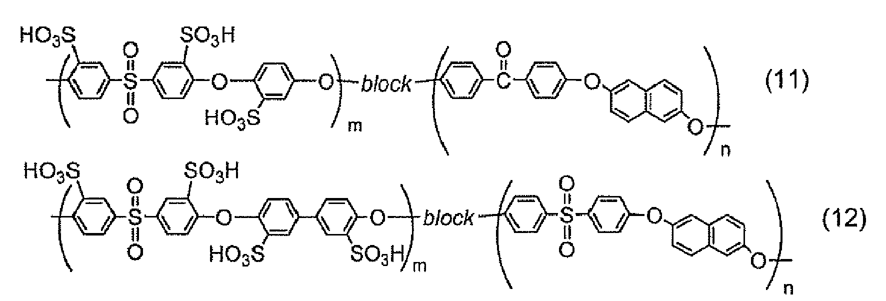

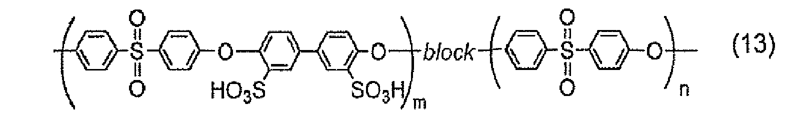

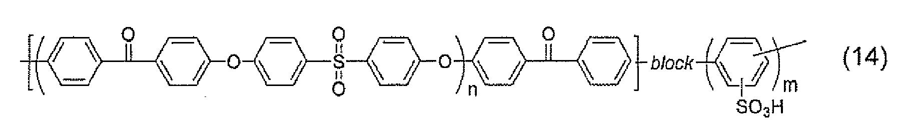

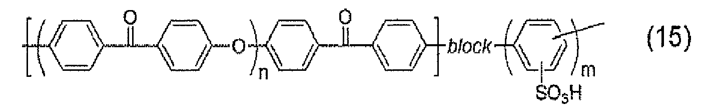

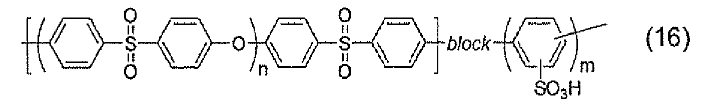

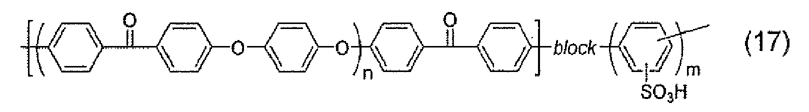

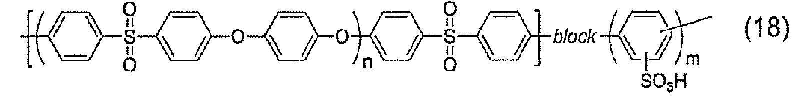

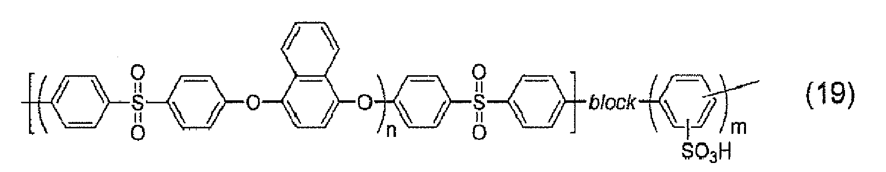

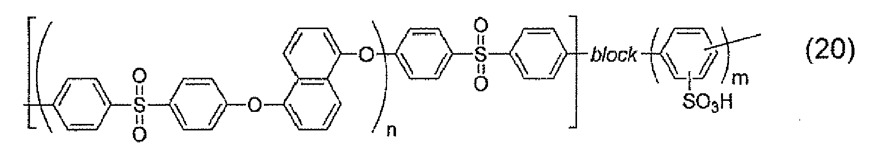

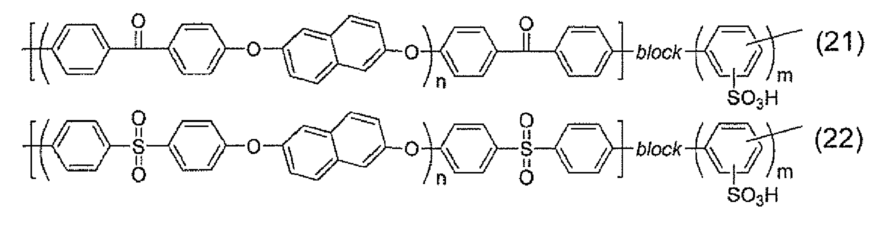

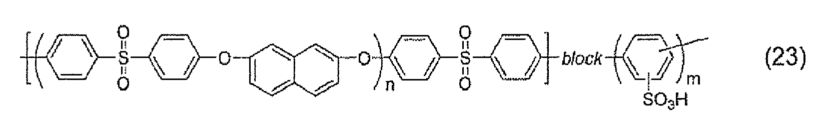

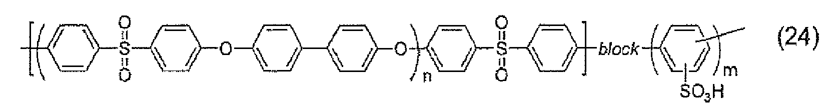

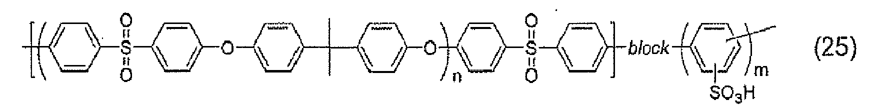

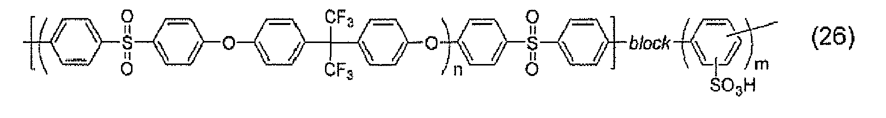

Here, in the above-described (1) to (26), "block" means a block copolymer including each block of a repeating unit in parenthesis. Further, these blocks may be in the form of being directly bonded, or may be in the form of being linked via a proper atom or atomic group.

Ion conductive polymers are more preferably the above-described (2), (7), (8), (16), (18), (22) to (25) or the like, and particularly preferably (16), (18), (22), (23) (25) or the like.

When the ion conductive polymer is the above block copolymer, it is particularly preferred that both a block (A) having an ion exchange group and a block (B) having substantially no ion exchange group have substantially no substituent containing a halogen atom. Examples of the halogen atom include fluorine, chlorine, bromine and iodine atoms.

As used herein, "have substantially no substituent containing a halogen atom" means that the blocks do not have 0.05 or more halogen atoms per repeating unit of the ion conductive polymer.

On the other hand, examples of the substituent, which may be contained, include such as an alkyl group, an alkoxy group, an aryl group, an aryloxy group and an acyl group, and an alkyl group is preferable. These substituents preferably have 1 to 20 carbon atoms and include, for example, substituents having less carbon atoms such as a methyl group, an ethyl group, a methoxy group, an ethoxy group, a phenyl group, a naphthyl group, a phenoxy group, a naphthyloxy group, an acetyl group and a propionyl group.

It is not preferred that the block copolymer contains a halogen atom since there is a possibility that hydrogen fluoride, hydrogen chloride, hydrogen bromide, hydrogen iodide or the like may be generated during operation of a fuel cell, thus causing corrosion of a fuel cell member.

Further, the molecular weight of the proton conductive polymer is preferably from 5,000 to 1,000,000, and particularly preferably from 15,000 to 400,000, in terms of a polystyrene equivalent number average molecular weight.

It is expected that the polymer electrolyte membrane obtained by the present invention are used in various fields.

For example, the polymer electrolyte of the present invention can be used as a diaphragm for an electrochemical device such as a fuel cell. This polymer electrolyte membrane is excellent in characteristics required as an electrolyte membrane for a fuel cell and has high utility value since the surface opposite the supporting substrate side has good affinity with an electrode for a fuel cell.

When used as an electrolyte membrane for a fuel cell, it becomes possible to move moisture from the air electrode side to the fuel electrode side by using a second surface having low wettability against water contacted with the supporting substrate upon membrane formation to the air electrode side and using an opposite first surface having high wettability against water to the fuel electrode side. Thus, the effects of optimizing moisture distribution of the air electrode, the electrolyte membrane and the fuel electrode can also be expected.

Therefore, the polymer electrolyte membrane produced by the method of the present invention is an industrially useful polymer electrolyte membrane used for a high-functional type solid polymer type fuel cell.

Further, according to the present invention, the membrane peeled from the supporting substrate after washing and drying in a continuous step can be directly taken up and laminated alone without using an inserting paper and causing blocking, and thus the present invention is industrially useful.

In the above description, the preferred embodiments of the present invention have been described, however, the preferred embodiments of the present invention disclosed above are merely examples and the scope of the present invention is not limited to these embodiments. The scope of the present invention is indicated by the claims and is further intended to cover all alternations within the description of the claims and within the meaning of the equivalents.

### EXAMPLES

The present invention will be described by way of Examples, but the present invention is not limited to the following Examples. Methods for the measurement of physical properties of the present invention are described below.

### (Measurement of Ion Exchange Capacity)

Using a halogen moisture meter set at a heating temperature of 105°C, dry weight of a polymer electrolyte membrane to be measured was determined. The polymer electrolyte membrane was then immersed in 5 mL of an aqueous 0.1 mol/L sodium hydroxide solution, further mixed with 50 mL of ion exchanged water and allowed to stand for 2 hours. Thereafter, titration was conducted by gradually adding 0.1 mol/L of hydrochloric acid to the solution in which the polymer electrolyte membrane was immersed thereby determining a neutral point. Then, from the dry weight of the polymer electrolyte membrane and the amount of hydrochloric acid required for neutralization, ion exchange capacity (unit: meq/g) of the polymer electrolyte membrane was calculated.

### (Measurement of GPC)

Polystyrene equivalent number average molecular weight (Mn) and weight average molecular weight (Mw) were measured by gel permeation chromatography (GPC) under the following conditions. Here, in the measurement, any one of the following mobile phase was used as a mobile phase (eluant).
[Mobile phase 1] DMAc (LiBr was added in a concentration of 10 mmol/dm³)
[Mobile phase 2] DMF (LiBr was added in a concentration of 10 mmol/dm³)

### (Measurement of Contact Angle)

Each of polymer electrolyte membranes of Examples and Comparative Examples was allowed to stand under an atmosphere at 23°C and 50%RH for 24 hours in a state of being peeled from a supporting substrate. Using a contact angle meter (Model CA-A, manufactured by Kyowa Interface Science Co., Ltd.), a contact angle against water droplets of a membrane surface was determined by a drop method. Five minutes after dropping water droplets having a diameter of 2.0 mm on a polymer electrolyte membrane, the contact angle was used as a measured value.

### (Measurement of Peeling Strength)

Each of polymer electrolyte membranes of Examples and Comparative Examples was cut into strip-shaped samples each measuring 10 mm in width x 60 mm in length, together with a supporting substrate. Each sample was immersed in ion-exchanged water at 80°C for 2 hours and water on the surface was wiped off. A so-called 180° peeling test was conducted by peeling the polymer electrolyte membrane from the supporting substrate at a peeling rate of 10 mm/min under an atmosphere at 23°C and 50%RH using a tensile testing machine (manufactured by Instron Corporation). Tight adhesion retention was rated "O" when the peeling strength is 0.1 (N/cm) or more, whereas, tight adhesion retention was rated "x" when the peeling strength is less than 0.1 (N/cm).

### (Method for TEM Observation)

Each of polymer electrolyte membranes of Examples and Comparative Examples was immersed in an aqueous stain solution (concentration of potassium iodide: 15%, concentration of iodine: 5%) at room temperature for 30 minutes and then embedded in a precured epoxy resin. Furthermore, a 60 nm thick piece was cut under dry conditions at room temperature using a microtome. The resulting piece was collected on a Cu mesh and then observed at an acceleration voltage of 300 kV using a transmission electron microscope (manufactured by Hitachi, Ltd. H9000NAR).

### (Synthesis Example 1)

Under an argon atmosphere, in a flask equipped with an azeotropic distillation device, 142.2 parts by weight of DMSO, 55.6 parts by weight of toluene, 5.7 parts by weight of sodium 2,5-dichlorobenzenesulfonate, 2.1 parts by weight of the following chloro-terminated polyethersulfone: 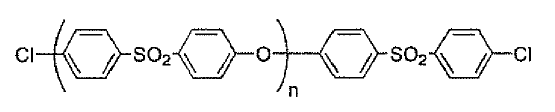 (manufactured by Sumitomo Chemical Co., Ltd., Sumicaexcel PES5200P) and 9.3 parts by weight of 2,2'-bipyridyl were charged, followed by stirring. After raising a bath temperature to 100°C, moisture in the system was azeotropically dehydrated by distilling off toluene with heating under reduced pressure. After cooling to 65°C, the pressure was returned to normal pressure. To this was added 15.4 parts by weight of bis(1,5-cyclooctadiene)nickel(0), followed by heating to 70°C and further stirring at the same temperature for 5 hours.
After air cooling, the reaction solution was poured into a large amount of methanol thereby precipitating a polymer and the polymer was separated by filtration. After repeating the operation of washing with 6 mol/L hydrochloric acid and filtration several times, the filtrate was washed until it is neutralized, and then dried under reduced pressure to obtain 3.0 parts by weight (IEC = 2.2 meq/g, Mn = 103,000, Mw = 257,000 [mobile phase 2]) of the objective following polyarylene-based block copolymer.

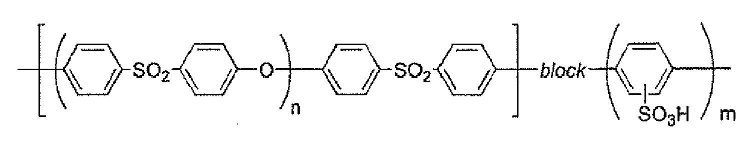

### (Membrane Formation Condition 1)

Cast membrane formation was conducted using a continuous drying furnace. That is, using membrane thickness variable doctor blade, a polymer electrolyte solution was adjusted to a desired membrane thickness and continuously applied onto a supporting substrate by flow casting, and then almost all of a solvent was removed by continuously transferring into a drying furnace. Drying conditions are described below.
Drying conditions: Temperature; 80°C, Time; 66 minutes (Here, the temperature means a preset temperature of a drying furnace and the time means the time during which the formed polymer electrolyte membrane enters into the drying furnace and comes out of the surface.)

After drying, the polymer electrolyte membrane was washed with ion-exchanged water to completely remove the solvent. The membrane was immersed in 2 N hydrochloric acid for 2 hours, washed again with ion-exchanged water and then air-dried to obtain a polymer electrolyte membrane.

### Example 1

The polyarylene-based block copolymer (IEC = 2.2 meq/g, Mn = 103,000, Mw = 257,000 [mobile phase 2], here, IEC is ion exchange capacity, Mn is a polystyrene equivalent number average molecular weight, Mw is a polystyrene equivalent weight average molecular weight, the same shall apply to Examples hereinafter) obtained in Synthesis Example 1 is referred to as BCP-1. BCP-1 was dissolved in DMSO to prepare a solution having a concentration of 10% by weight was prepared. Using the resulting solution and a polyimide film measuring 300 mm in width and 30 m in length (manufactured by DuPont Teijin Co., Ltd. under the trade name of Kapton) as a supporting substrate, a polymer electrolyte membrane having a membrane thickness of about 30 µm was produced by a method of the membrane formation condition 1. TEM observation revealed that the polymer electrolyte membrane has a microphase-separated structure, and both a hydrophilic phase and a hydrophobic phase form a continuous phase.

### Example 2

A mixture (weight ratio of 90:10) of a block copolymer (BCP-1) obtained in Synthesis Example 1 and a phosphonic acid group-containing polymer (see the following formula, referred to as AD-1) synthesized with reference to the method described in Reference Example 3 of JP-A-2005-38834 was dissolved in DMSO to prepare a solution having a concentration of 10% by weight. Using the resulting solution and a polyethylene terephthalate (PET) film measuring 300 mm in width and 500 m in length (manufactured by Toyobo Co., Ltd., E5000 grade) as a supporting substrate, a polymer electrolyte membrane having a membrane thickness of about 30 µm was produced by a method of membrane formation example 1. TEM observation revealed that the polymer electrolyte membrane has a microphase-separated structure, and both a hydrophilic phase and a hydrophobic phase form a continuous phase. 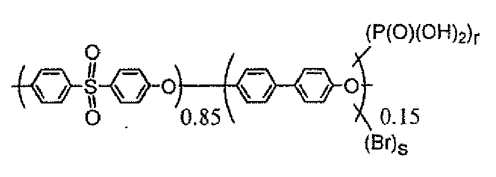 (r = 1.9, s = 0.0, the number attached to a repeating unit represents a molar fraction of the repeating unit)

### Example 3

A sulfonic acid group-containing block copolymer (IEC = 1.8 meq/g, Mn = 60,000, Mw = 420,000 [mobile phase 1]) synthesized with reference to the method described in JP-A-2005-206807 (Example 2 [0059], see the following formula) (referred to BCP-3) was dissolved in NMP to prepare a solution having a concentration of 13.5% by weight. Using the resulting solution and a polyethylene terephthalate (PET) film measuring 300 mm in width and 500 m in length (manufactured by Toyobo Co., Ltd., E5000 grade) as a supporting substrate, a polymer electrolyte membrane having a membrane thickness of about 30 µm was produced by a method of membrane formation condition 1. TEM observation revealed that the polymer electrolyte membrane has a microphase-separated structure, and both a hydrophilic phase and a hydrophobic phase form a continuous phase. 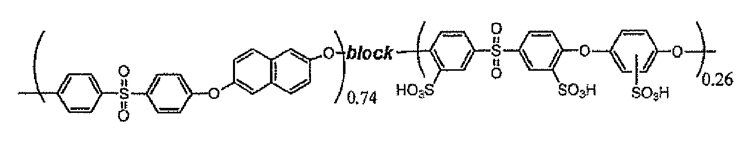 (the number attached to a repeating unit represents a molar fraction of the repeating unit)

### Example 4

BCP-1 was dissolved in DMSO to prepare a solution having a concentration of 10% by weight. Using the resulting solution and a polyethylene terephthalate (PET) film measuring 300 mm in width and 30 m in length (manufactured by Toyobo Co., Ltd., E5000 grade) as a supporting substrate, a polymer electrolyte membrane having a membrane thickness of about 10 µm was produced by a method of membrane formation condition 1. TEM observation revealed that the polymer electrolyte membrane has a microphase-separated structure, and both a hydrophilic phase and a hydrophobic phase form a continuous phase.

### Comparative Example 1

BCP-1 was dissolved in DMSO to prepare a solution having a concentration of 10% by weight. Using the resulting solution and a silica-deposited PET measuring 300 mm in width and 1,000 m in length (manufactured by Oike & Co., Ltd., membrane thickness 12 µm) as a supporting substrate, a polymer electrolyte membrane having a membrane thickness of about 30 µm was produced by a method of membrane formation condition 1. TEM observation revealed that the polymer electrolyte membrane has a microphase-separated structure, and both a hydrophilic phase and a hydrophobic phase form a continuous phase.

### Comparative Example 2

A mixture (weight ratio of 90:10) of BCP-1 and a phosphonic acid group-containing polymer (AD-1) was dissolved in DMSO to prepare a solution having a concentration of 10% by weight. Using the resulting solution and aluminum sheet measuring 300 mm in width and 1,000 m in length (membrane thickness 200 µm) as a supporting substrate, a polymer electrolyte membrane having a membrane thickness of about 30 µm was produced by a method of membrane formation condition 1. TEM observation revealed that the polymer electrolyte membrane has a microphase-separated structure, and both a hydrophilic phase and a hydrophobic phase form a continuous phase.

### Comparative Example 3

A mixture (weight ratio of 90:10) of a polyarylene-based block copolymer (IEC = 2.2 meq/g, Mn = 116,000, Mw = 228,000 [mobile phase 2]: BCP-2) of a synthesis lot different from that of BCP-1 synthesized according to the polymerization method of Synthesis Example 1 and a phosphonic acid group-containing polymer (referred to as AD-2) synthesized with reference to the method described in JP-A-2006-66391 ([0059]) was dissolved in DMSO to prepare a solution having a concentration of 10% by weight. Using the resulting solution and alumina-deposited PET measuring 300 mm in width and 1,000 m in length (membrane thickness 100 µm) as a supporting substrate, a polymer electrolyte membrane having a membrane thickness of about 30 µm was produced by a method of membrane formation condition 1. TEM observation revealed that the polymer electrolyte membrane has a microphase-separated structure, and both a hydrophilic phase and a hydrophobic phase form a continuous phase.

### Comparative Example 4

BCP-3 was dissolved in N-methyl-2-pyrrolidone to prepare a solution having a concentration of 13.5% by weight. Using the resulting solution and an alumina-deposited PET measuring 300 mm in width and 1,000 m in length (membrane thickness 100 µm), a polymer electrolyte membrane having a membrane thickness of about 30 µm was produced by a method of membrane formation condition 1. TEM observation revealed that the polymer electrolyte membrane has a microphase-separated structure, and both a hydrophilic phase and a hydrophobic phase form a continuous phase.

Polymer electrolyte compositions used in Examples 1 to 4 and Comparative Examples 1 to 4, and the kind of supporting substrates upon membrane formation are shown in Table 1.

**Table 1**

| | Polymer electrolyte membrane | Additive | Supporting substrate |
|---|---|---|---|
| Example. 1 | BCP-1 (100 Parts by weight) | - | PI |
| Example. 2 | BCP-1 (90 Parts by weight) | AD-1 (10 Parts by weight) | PET |
| Example. 3 | BCP-3 (100 Parts by weight) | - | PET |
| Example. 4 | BCP-1 (100 Parts by weight) | - | PET |
| Comparative Example 1 | BCP-1 (100 Parts by weight) | - | Silica-deposited PET |
| Comparative Example 2 | BCP-1 (90 Parts by weight) | AD-1 (10 Parts by weight) | Aluminum sheet |
| Comparative vvExample 3 | BCP-2 (90 Parts by weight) | AD-2 (10 Parts by weight) | Alumina-deposited PET |
| Comparative Example 4 | BCP-3 (100 Parts by weight) | - | Alumina-deposited PET |

| | | | |
|---|---|---|---|
| PET: Polyethylene terephthalate film PI: Polyimide film | | | |

A substrate-membrane peeling strength test of Examples 1 to 4 and Comparative Examples 1 to 4 is shown in the table below.

**Table 2**

| | Contact angle (°) | | | | Test on peeling strength between substrate and membrane |
|---|---|---|---|---|---|
| | θ₁ | θ₂ | θ₂-θ₁ | Surface of supporting substrate | |
| Example. 1 | 32 | 84 | 51 | θ₂ side | ○ (0.50N/cm) |
| Example. 2 | 32 | 91 | 59 | θ₂ side | ○ (0.70N/cm) |
| Example. 3 | 31 | 76 | 45 | θ₂ side | ○ (0.74N/cm) |
| Example. 4 | 36 | 76 | 40 | θ₂ side | O (0.65N/cm) |
| Comparative Example 1 | 32 | 33 | 1 | θ₁ side | × (less than 0.1 N/cm) |
| Comparative Example 2 | 27 | 48 | 21 | θ₁ side | × (less than 0.1 N/cm) |
| Comparative Example 3 | 36 | 43 | 7 | θ₁ side | × (less than 0.1 N/cm) |
| Comparative Example 4 | 24 | 43 | 19 | θ₁ side | × (less than 0.1 N/cm) |

| | | | | | |
|---|---|---|---|---|---|
| Contact angle θ ₁: Contact angle (°) against water of first surface of film surface θ ₂: Contact angle (°) against water of second surface of film surface θ ₂ - θ₁: Difference (degree) in contact angle between first surface and second surface | | | | | |

## Claims

1. A polymer electrolyte membrane containing at least one ion conductive polymer, wherein when, of the surfaces of the membrane, one being smaller in contact angle against water is a first surface and one being larger in contact angle against water is a second surface, the second surface has not been subjected to a surface treatment, and the difference in contact angle against water between the first surface and the second surface is more than 30°.

2. The polymer electrolyte membrane according to claim 1, wherein both said first surface and said second surface have not been subjected to a surface treatment.

3. The polymer electrolyte membrane according to claim 1 or 2, wherein the contact angle against water of the surface of the first surface of the membrane is 10° or more and 60° or less, and the contact angle against water of the surface of the second surface is 60° or more.

4. The polymer electrolyte membrane according to any one of claims 1 to 3, wherein the contact angle against water of the surface of the second surface of the membrane is 110° or less.

5. The polymer electrolyte membrane according to any one of claims 1 to 4, wherein said ion conductive polymer has an aromatic ring in the main chain, and also has an ion exchange group bonded directly to the aromatic ring or bonded indirectly to the aromatic ring with another atom or atomic group interposed therebetween.

6. The polymer electrolyte membrane according to claim 5, wherein said ion conductive polymer has a side chain.

7. The polymer electrolyte membrane according to any one of claims 1 to 4, wherein said ion conductive polymer has an aromatic ring in the main chain, and also may have a side chain having an aromatic ring, and at least one of the aromatic ring of the main chain and the aromatic ring of the side chain has an ion exchange group bonded directly to the aromatic ring or bonded indirectly to the aromatic ring with another atom interposed therebetween.

8. The polymer electrolyte membrane according to any one of claims 1 to 7, wherein said ion exchange group is a sulfonic acid group.

9. The polymer electrolyte membrane according to any one of claims 1 to 8 wherein said ion conductive polymer has one or more repeating units having an ion exchange group selected from the following general formulas (1a) to (4a): 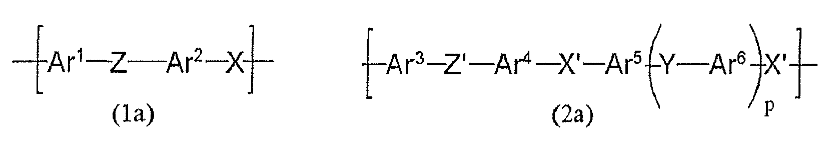 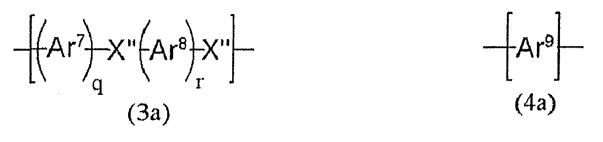 wherein Ar¹ to Ar⁹ each independently represents a divalent aromatic group which has an aromatic ring in the main chain, and also may have a side chain having an aromatic ring, provided that at least one of the aromatic ring of the main chain and the aromatic ring of the side chain has a proton exchange group bonded directly to the aromatic ring, Z and Z' each independently represents either CO or SO₂, X, X' and X" each independently represents either O or S, Y represents a direct bond or a group represented by the following general formula (10), p represents 0, 1 or 2, and q and r each independently represents 1, 2 or 3, and
one or more repeating units having substantially no ion exchange group selected from the following general formulas (1b) to (4b): 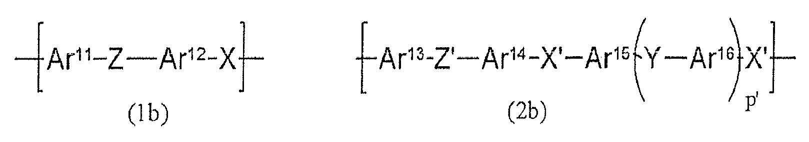 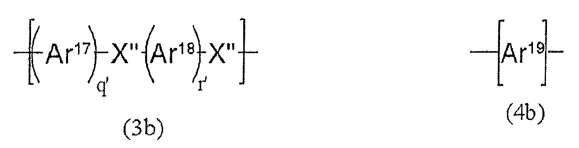 wherein Ar¹¹ to Ar¹⁹ each independently represents a divalent aromatic carbon group which may have a substituent as the side chain, Z and Z' each independently represents either CO or SO₂, X, X' and X" each independently represents either O or S, Y represents a direct bond or a group represented by the following general formula (10), p' represents 0, 1 or 2, and q' and r' each independently represents 1, 2 or 3, and 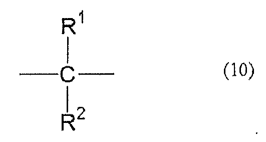 wherein R¹ and R² each independently represents a hydrogen atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent or an acyl group having 2 to 20 carbon atoms which may have a substituent, and R¹ and R² may be combined to form a ring,
wherein the repeating unit having substantially no ion exchange group is a repeating unit having less than 0.5 ion exchange group on average per one repeating unit.

10. The polymer electrolyte membrane according to any one of claims 1 to 9, wherein said ion conductive polymer is a copolymer comprising a polymer segment (A) having an ion exchange group and a polymer segment (B) having substantially no ion exchange group, wherein the segment having substantially no ion exchange group is a segment having less than 0.5 ion exchange group on average per one repeating unit.

11. The polymer electrolyte membrane according to any one of claims 1 to 9, wherein said ion conductive polymer is a block copolymer comprising a block (A) having an ion exchange group and a block (B) having substantially no ion exchange group, wherein the block having substantially no ion exchange group is a block having less than 0.5 ion exchange group on average per one repeating unit.

12. The polymer electrolyte membrane according to any one of claims 1 to 11, which has a structure microphase-separated into at least two or more phases.

13. The polymer electrolyte membrane according to any one of claims 1 to 9, which contains, as the ion conductive polymer, a block copolymer comprising a block (A) having an ion exchange group and a block (B) having substantially no ion exchange group, and also has a microphase-separated structure containing a phase having a high density of a block (A) having an ion exchange group and a phase having a high density of a block (B) having substantially no ion exchange group, wherein the block (B) having substantially no ion exchange group is a block having less than 0.5 ion exchange group on average per one repeating unit.

14. The polymer electrolyte membrane according to any one of claims 1 to 9 or 12, wherein said ion conductive polymer has at least one block (A) having an ion exchange group and at least one block (B) having substantially no ion exchange group, the block (A) having an ion exchange group has a repeating structure represented by the following general formula (4a'): 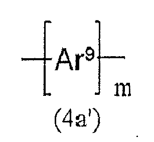 wherein m represents an integer of 5 or more, Ar⁹ represents a divalent aromatic group, in which the divalent aromatic group may be substituted with a fluorine atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acyl group having 2 to 20 carbon atoms which may have a substituent, and Ar⁹ has an ion exchange group bonded directly to an aromatic ring constituting the main chain or bonded indirectly to an aromatic ring with the side chain interposed therebetween, and
the block (B) having substantially no ion exchange group has one or more repeating structures selected from the following general formulas (1b'), (2b') and (3b'): 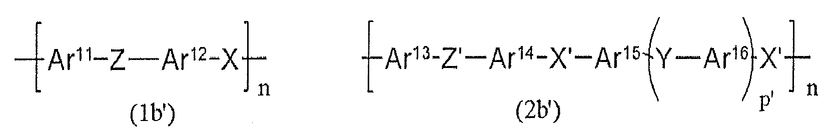 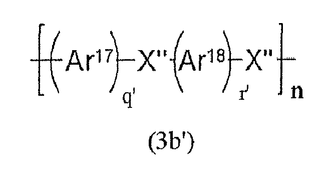 wherein n represents an integer of 5 or more, Ar¹¹ to Ar¹⁸ each independently represents a divalent aromatic group, in which the divalent aromatic group may be substituted with an alkyl group having 1 to 18 carbon atoms, an alkoxy group having 1 to 10 carbon atoms, an aryl group having 6 to 10 carbon atoms, an aryloxy group having 6 to 18 carbon atoms or an acyl group having 2 to 20 carbon atoms, and other symbols are the same as those in the general formulas (1b) to (3b), wherein the block (B) having substantially no ion exchange group is a block having less than 0.5 ion exchange group on average per one repeating unit.

15. The polymer electrolyte membrane according to any one of claims 1 to 9 or 12, wherein said ion conductive polymer has at least one block (A) having an ion exchange group and at least one block (B) having substantially no ion exchange group, and in the block (A) having an ion exchange group, an ion exchange group is bonded directly to an aromatic ring of the main chain, wherein the block (B) having substantially no ion exchange group is a block having less than 0.5 ion exchange group on average per one repeating unit.

16. The polymer electrolyte membrane according to any one of claims 1 to 9 or 12, wherein said ion conductive polymer has at least one block (A) having an ion exchange group and at least one block (B) having substantially no ion exchange group, and both the block (A) having an ion exchange group and the block (B) having substantially no ion exchange group have substantially no substituent containing a halogen atom, wherein the block (B) having substantially no ion exchange group is a block having less than 0.5 ion exchange group on average per one repeating unit and the blocks (A) and (B) having substantially no substituent containing a halogen atom are blocks having less that 0.05 halogen atoms per repeating unit of the ion conductive polymer.

17. A laminate in which the ion conductive polymer electrolyte membrane according to any one of claims 1 to 16 is laminated on a supporting substrate in a state where the second surface of the polymer electrolyte membrane is bonded to the supporting substrate.

18. The laminate according to claim 17, wherein said surface bonded to the polymer electrolyte membrane of the supporting substrate is formed of a resin.

19. The laminate according to claim 17, wherein said supporting substrate is a resin film.
